# EUROPEAN PATENT APPLICATION

(11) **EP 4 272 940 A1**
(43) Date of publication of application: **08.11.2023**
(21) Application number: 21914523.2
(22) Date of filing: 29.12.2021
(51) Int. Cl.: B29D 30/24, B29D 30/26

(54) **METHOD AND DEVICE FOR ADJUSTING AXIAL SIZE OF MIDDLE DRUM ASSEMBLY, AND FORMING DRUM**

(30) Priority: 31.12.2020 CN 202011638935
(71) Applicant: Mesnac Co., Ltd., Qingdao, Shandong 266112 (CN); Qingdao Mesnac Machinery & Electric Engineering Co., Ltd., Jiaozhou Qingdao, Shandong 266300 (CN)
(72) Inventor: SUN, Xiaosong, Qingdao, Shandong 266042 (CN); ZHOU, Tao, Qingdao, Shandong 266042 (CN); YU, Yihang, Qingdao, Shandong 266042 (CN); ZHANG, Jifeng, Qingdao, Shandong 266042 (CN); HU, Jie, Qingdao, Shandong 266042 (CN)
(74) Representative: Winter, Brandl - Partnerschaft mbB
(86) International application number: PCT/CN2021/142572
(87) International publication number: WO 2022/143791

(57) **Abstract**

Disclosed are an adjusting method and an adjusting apparatus for an axial dimension of a middle drum assembly, and a building drum. The adjusting apparatus for the axial dimension of the middle drum assembly includes a first middle drum block, a second middle drum block, and an intermediate middle drum block located between the first middle drum block and the second middle drum block. The adjusting method includes: moving at least one of the first middle drum block and the second middle drum block in a direction of approaching each other, and the first middle drum block, the second middle drum block and the intermediate middle drum block cross and retract with each other, so as to shorten a length of the middle drum assembly; moving at least one of the first middle drum block and the second middle drum block in a direction away from each other, and the first middle drum block, the second middle drum block and the intermediate middle drum block cross and extend with each other, so as to lengthen the length of the middle drum assembly. The present invention solves the problem in the related art that the production efficiency is reduced due to the frequent replacement of a tooth block.

## Description

### Cross-Reference to Related Application

The present invention claims priority to and the benefit of Chinese Patent Application No. 202011638935.4, filed to the China National Intellectual Property Administration (CHIPA) on 31 December 2020, which is hereby incorporated by reference in its entirety.

### Technical Field

The present invention relates to the technical field of tire processing, and in particular to an adjusting method and an adjusting apparatus for an axial dimension of a middle drum assembly, and a building drum.

### Background

The crossed toothed block structure of a conventional building drum consists of two parts, left and right toothed blocks. Since a range of lengths covered by a set of tooth blocks is relatively small, when a tire specification is switched, the length of the tooth blocks often needs to be replaced to meet processing requirements of different specifications, and frequent replacement of the tooth blocks reduces processing efficiency, which is not conducive to continuous production. Some related technical solutions use a tooth block that is quickly replaced to improve replacement speed. However, this method only improves replacement speed and does not solve the problem of replacement frequency; therefore, the effect of improving efficiency is limited.

### Summary

The main purpose of the present invention is to provide an adjusting method and an adjusting apparatus for an axial dimension of a middle drum assembly, and a building drum, so as to solve the problem in the related art that the production efficiency is reduced due to frequent replacement of the toothed blocks.

In order to achieve the above object, some embodiments of the present invention provide an adjusting method for an axial dimension of a middle drum assembly, an adjusting apparatus for the axial dimension of the middle drum assembly includes a first middle drum block, a second middle drum block, and an intermediate middle drum block located between the first middle drum block and the second middle drum block, the adjustment method includes: moving at least one of the first middle drum block and the second middle drum block in a direction of approaching each other, the first middle drum block, the second middle drum block and the intermediate middle drum block cross and retract with each other, so as to shorten a length of the middle drum assembly; moving at least one of the first middle drum block and the second middle drum block in a direction away from each other, and the first middle drum block, the second middle drum block and the intermediate middle drum block cross and extend with each other, so as to lengthen the length of the middle drum assembly.

In some embodiments, both of the first middle drum block and the second middle drum block include a telescoping portion extending in an axial direction of the middle drum assembly, when at least one of the first middle drum block and the second middle drum block moves in the direction of approaching each other, the telescoping portion of the first middle drum block and the intermediate middle drum block extend into a gap between the two telescoping portions of the second middle drum block, the telescoping portion of the second middle drum block and the intermediate middle drum block extend into a gap between the two telescoping portions of the first middle drum block.

In some embodiments, there are a plurality of telescoping portions of the first middle drum block, a plurality of telescoping portions of the intermediate middle drum block, and a plurality of telescoping portions of the second middle drum block, which are arranged alternately in sequence along a circumferential direction of the middle drum assembly.

In some embodiments, when at least one of the first middle drum block and the second middle drum block moves in the direction of approaching each other, one of the plurality of telescoping portions of the first middle drum block and one of the plurality of intermediate middle drum blocks extend into the gap between two adjacent telescoping portions of the second middle drum block, and one of plurality of telescoping portions of the second middle drum block and one of the plurality of intermediate middle drum blocks extend into the gap between two adjacent telescoping portions of the first middle drum block.

In some embodiments, the first middle drum block and the second middle drum block further include an end portion, the end portion is connected to the telescoping portion, and the telescoping portion of the first middle drum block, the intermediate middle drum block and the telescoping portion of the second middle drum block are driven to cross and retract or extend with each other by driving the end portion.

Some other embodiments of the present invention provide an adjusting apparatus for an axial dimension of a middle drum assembly, including: a first middle drum block; a second middle drum block; an intermediate middle drum block, the intermediate middle drum block is located between the first middle drum block and the second middle drum block, and the first middle drum block, the intermediate middle drum block and the second middle drum block are telescopically matched, and cross and retract or extend with each other when the first middle drum block and the second middle drum block are close to or away from each other, so as to shorten or lengthen a length of the middle drum assembly.

In some embodiments, both of the first middle drum block and the second middle drum block include a plurality of telescoping portions extending in an axial direction of the middle drum assembly, and the plurality of telescoping portions of the first middle drum block, the intermediate middle drum block and the plurality of telescoping portions of the second middle drum block are in a cross-telescopic matched with each other.

In some embodiments, there are a plurality of telescoping portions of the first middle drum block, a plurality of intermediate middle drum blocks, and a plurality of telescoping portions of the second middle drum block, which are arranged alternately in sequence along a circumferential direction of the middle drum assembly.

In some embodiments, a gap is formed between two adjacent telescoping portions of the plurality of telescoping portions on the first middle drum block or the second middle drum block, one of the plurality of telescoping portions of the first middle drum block and one of the plurality of intermediate middle drum blocks extend into the gap between the two adjacent telescoping portions of the second middle drum block, one of the plurality of telescoping portions of the second middle drum block and one of the plurality of intermediate middle drum blocks extend into the gap between the two adjacent telescoping portions of the first middle drum block.

In some embodiments, both of the first middle drum block and the second middle drum block further include an end portion, the end portion extends along a circumferential direction of the middle drum assembly, and the telescoping portion is connected to the end portion and moves synchronously with the end portion.

In some embodiments, the adjusting apparatus further includes a radial drive assembly, at least one of the first middle drum block, the second middle drum block and the intermediate middle drum block is connected to the radial drive assembly, and move along a radial direction of the middle drum assembly driven by the radial drive assembly.

Some still other embodiments of the present invention provide a building drum, including the described above adjusting apparatus for the axial dimension of the middle drum assembly.

By applying the technical solution of the present invention, the intermediate middle drum block is arranged between the first middle drum block and the second middle drum block, when adjusting the axial dimension of the middle drum assembly, during a movement of at least one of the first middle drum block and the second middle drum block in a direction of approaching or away from each other, the first middle drum block, the second middle drum block, and the intermediate middle drum block cross and retract or extend with each other, which shortens or lengthens the length of the middle drum assembly. By means of the described arrangement manner, a triple extension and retraction of the middle drum assembly is able to be realized, so that the range of the adjustable axial dimension of the middle drum assembly is larger, and the coverage range of the middle drum assembly is enlarged, thereby reducing the number of times of replacing toothed blocks, and significantly improving the production efficiency.

### Brief Description of the Drawings

The accompanying drawings, which form a part of the present invention, are configured for providing a further understanding of the present invention. The embodiments and illustrations of the present invention are configured for explaining the present invention, and do not form improper limits to the present invention. In the drawings:
Fig. 1 shows a structural schematic diagram of an adjusting apparatus for an axial dimension of a middle drum assembly in the present invention;
Fig. 2 shows a structural schematic diagram of an application of the adjusting apparatus in Fig. 1 on a building drum.

The figures include the following reference signs:
10: first middle drum block; 11: telescoping portion; 12: end portion; 20: second middle drum block; 30: intermediate middle drum block.

### Detailed Description of the Embodiments

It should be noted that the embodiments of the present invention and the characteristics in the embodiments may be combined under the condition of no conflicts. The present invention will be described below with reference to the drawings and embodiments in detail.

In order to solve the problem in the related art that the production efficiency is reduced due to frequent replacement of the tooth blocks, the present invention provides an adjusting method and an adjusting apparatus for an axial dimension of a middle drum assembly, and a building drum. The building drum has the adjusting apparatus for the axial dimension of the drum assembly as described below.

According to the adjusting method for the axial dimension of the middle drum assembly in some embodiments, the adjusting apparatus for the axial dimension of the middle drum assembly includes a first middle drum block 10, a second middle drum block 20, and an intermediate middle drum block 30 located between the first middle drum block 10 and the second middle drum block 20, the adjusting method includes: moving at least one of the first middle drum block 10 and the second middle drum block 20 in a direction of approaching each other, the first middle drum block 10, the second middle drum block 20 and the intermediate middle drum block 30 cross and retract with each other, so as to shorten a length of the middle drum assembly; moving at least one of the first middle drum block 10 and the second middle drum block 20 in a direction away from each other, and the first middle drum block 10, the second middle drum block 20 and the intermediate middle drum block 30 cross and extend with each other, so as to lengthen the length of the middle drum assembly.

According to the embodiments, the intermediate middle drum block 30 is arranged between the first middle drum block 10 and the second middle drum block 20, when adjusting the axial dimension of the middle drum assembly, during a movement of at least one of the first middle drum block 10 and the second middle drum block 10 in a direction of approaching or away from each other, the first middle drum block 10, the second middle drum block 20, and the intermediate middle drum block 30 cross and retract or extend with each other, which shortens or lengthens the length of the middle drum assembly. By means of the described arrangement manner, a triple extension and retraction of the middle drum assembly is able to be realized, so that a range of the adjustable axial dimension of the middle drum assembly is larger, and the coverage range of the middle drum assembly is enlarged, thereby reducing the number of times of replacing toothed blocks, and significantly improving the production efficiency.

In some embodiments, both of the first middle drum block 10 and the second middle drum block 20 include a telescoping portion 11 extending in an axial direction of the middle drum assembly, and the telescoping portion 11 cooperates with the intermediate middle drum block 30 to realize the triple extension and retraction. Specifically, when at least one of the first middle drum block 10 and the second middle drum block 20 moves in the direction of approaching each other, the telescoping portion 11 of the first middle drum block 10 and the intermediate middle drum block 30 extend into a gap between the two telescoping portions 11 of the second middle drum block 20, at the same time, the telescoping portion 11 of the second middle drum block 20 and the intermediate middle drum block 30 extend into a gap between the two telescoping portions 11 of the first middle drum block 10. Thus, an effect of the triple extension and retraction is achieved.

In some embodiments, there are a plurality of telescoping portions 11 of the first middle drum block 10, a plurality of intermediate middle drum blocks 30 and a plurality of telescoping portions 11 of the second middle drum block 20, and the three telescoping portions are arranged alternately in sequence along a circumferential direction of the middle drum assembly. Namely, along the circumferential direction of the middle drum assembly, forming in sequence one telescoping portion 11 of the plurality of telescoping portions 11 of the first middle drum block 10, one intermediate middle drum block 30 of the plurality of intermediate middle drum blocks 30, one telescoping portion 11 of the plurality of telescoping portions 11 of the second middle drum block 20, another telescoping portion 11 of the plurality of telescoping portions 11 of the first middle drum block 10, another intermediate middle drum block 30 of the plurality of intermediate middle drum blocks 30, another telescoping portion 11 of the plurality of telescoping portions 11 of the second middle drum block 20...and so on. In this way, when at least one of the first middle drum block 10 and the second middle drum block 20 moves in the direction of approaching each other, one telescoping portion 11 of the plurality of telescoping portions 11 of the first middle drum block 10 and one intermediate middle drum block 30 of the plurality of intermediate middle drum blocks 30 extend into the gap between two adjacent telescoping portions 11 of the second middle drum block 20, and one telescoping portion 11 of the plurality of telescoping portions 11 of the second middle drum block 20 and one intermediate middle drum block 30 of the plurality of intermediate middle drum blocks 30 extend into the gap between two adjacent telescoping portions 11 of the first middle drum block 10.

In some embodiments, the first middle drum block 10 and the second middle drum block 20 further include an end portion 12, one side of the end portion 12 is connected to the telescoping portion 11, the other side of the end portion 12 is connected to a side drum of the middle drum assembly. The end portion 12 is driven by the side drum to move, and the end portion 12 drives the telescoping portion 11 to move, so that the telescoping portion 11 of the first middle drum block 10, the intermediate middle drum block 30 and the telescoping portion 11 of the second middle drum block 20 cross and retract or extend with each other, realizing the adjustment of the axial dimension of the middle drum assembly.

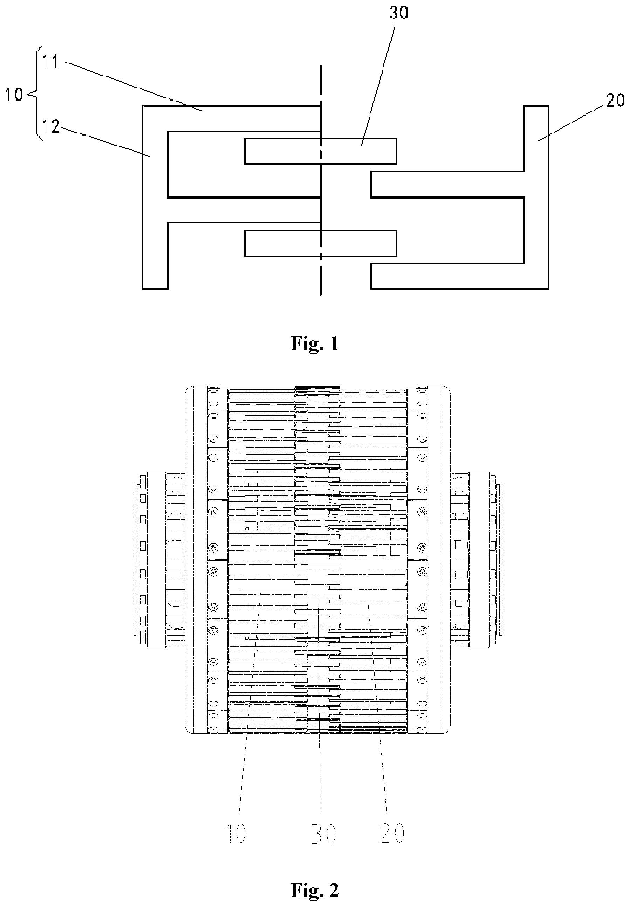

As shown in Figs. 1-2, some embodiments further provide an adjusting apparatus for the axial dimension of the middle drum assembly, including the first middle drum block 10, the second middle drum block 20 and the intermediate middle drum block 30, the intermediate middle drum block 30 is located between the first middle drum block 10 and the second middle drum block 20, and the first middle drum block 10, the intermediate middle drum block 30 and the second middle drum block 20 are telescopically matched, and cross and contract or extend with each other when the first middle drum block 10 and the second middle drum block 20 are close to or away from each other, so as to shorten or lengthen the length of the mid drum assembly. In the embodiments, by adding the middle central drum block 30, the triple extension and retraction of the middle drum assembly is achieved, and on the one hand, the range of the adjustable axial dimension of the middle drum structure is larger, the coverage area of the middle drum assembly is enlarged, and a maximum dimension of the middle drum assembly is improved, so that the number of times of replacing the toothed blocks is reduced, the production efficiency is obviously improved, meanwhile, the axial dimension of the middle drum assembly is still able to be adjusted to a small value. Thus, a minimum dimension of the middle drum assembly is not affected.

In practical use, the first middle drum block 10 and the second middle drum block 20 are generally driven to move at the same time, movement directions of the two middle drum blocks are opposite, and speeds of the two middle drum blocks are equal. Of course, it is also possible that only one of the two middle drum blocks is driven to move according to actual needs, or the two middle drum blocks move asynchronously.

The first middle drum block 10 and the second middle drum block 20 of the embodiments are completely identical in shape, a difference therebetween lies in different relative positions, and the first middle drum block 10, the second middle drum block 20 and the intermediate middle drum block 30 are staggered from each other by a certain angle along the circumferential direction of the middle drum assembly, so as to achieve a cross extension and retraction fit among the first middle drum block 10, the second middle drum block 20 and the intermediate middle drum block 30.

There are a plurality of telescoping portions 11 of the first middle drum block 10, a plurality of intermediate middle drum blocks 30, and a plurality of telescoping portions 11 of the second middle drum block 20, which are arranged alternately in sequence along the circumferential direction of the middle drum assembly. Taking the first middle drum block 10 as an example, the first middle drum block 10 includes the plurality of telescoping portions 11 extending along the axial direction of the middle drum assembly, and the plurality of telescoping portions 11 of the first middle drum block 10, the plurality of intermediate middle drum blocks 30 and the plurality of telescoping portions 11 of the second middle drum block 20 cross and extend or retract with each other. Specifically, as stated above, a gap is formed between two adjacent telescoping portions 11 of the plurality of telescoping portions 11 on the first middle drum block 10 or the second middle drum block 20, one of the plurality of telescoping portions 11 of the first middle drum block 10 and one of the plurality of intermediate middle drum blocks 30 extend into the gap between two adjacent telescoping portions 11 of the plurality of telescoping portions 11 of the second middle drum block 20, One of the plurality of telescoping portions 11 and one of the plurality of intermediate middle drum blocks 30 extend into the gap between the two adjacent telescoping portions 11 of the plurality of telescoping portions 11 of the first middle drum block 10.

In some embodiments, a width of each of the plurality of telescoping portions 11 is equal to a width of each of the plurality of intermediate middle drum blocks 30. A width of the gap between the two adjacent telescoping portions 11 is set to twice the width of each of the plurality of telescoping portions, thus, when the first middle drum block 10 is close to the second middle drum block 20, the telescoping portion 11 on the second middle drum block 20 and the intermediate middle drum block 30 are able to exactly extend in the gap between the two adjacent telescoping portions 11 on the first middle drum block 10, on the one hand, a tightness of fitting between the three is improved, and an occurrence of circumferential shaking is avoided, and on the other hand, a strength of fitting is improved, a structural strength of the middle drum assembly as a whole is guaranteed. Of course, the width of the gap between the two adjacent telescoping portions 11, the widths of the telescoping portion 11 and the middle drum block 30, etc. are also adjusted according to needs.

In some embodiments, the first middle drum block 10 and the second middle drum block 20 further include an end portion 12, the end portion 12 extends along the circumferential direction of the middle drum assembly, one side of the end portion 12 is connected to the telescoping portion 11, the other side of the end portion 12 is connected to a side drum of the middle drum assembly, and the end portion 12 moves synchronously with the telescoping portion 11 and the side drum, thereby achieving an action of the first middle drum block 10 and the second middle drum block 20. The first middle drum block 10, the second middle drum block 20 and the intermediate middle drum block 30 of the embodiments are all toothed blocks.

The adjusting apparatus of the embodiments further includes a radial drive assembly. At least one of the first middle drum block 10, the second middle drum block 20 and the intermediate middle drum block 30 is connected to the radial drive assembly, and moves along the radial direction of the middle drum assembly driven by the radial drive assembly, thereby achieving the adjustment of the radial dimensions of the first middle drum block 10, the second middle drum block 20 and the intermediate middle drum block 30. The radial drive assembly adopts various forms such as cylinder driving and connecting rod driving, or motor driving and connecting rod driving, as long as the radial drive assembly drives the first middle drum block 10, the second middle drum block 20 and the intermediate middle drum block 30 to move radially.

It should be noted that, "a plurality" in the foregoing embodiment refers to at least two.

From the above description, it is seen that the above embodiments of the present invention achieve the following technical effects:
The present invention solves the problem in the related art that the production efficiency is reduced due to the frequent replacement of tooth blocks;
achieving triple extension and retraction of the middle drum assembly, so that the range of the adjustable axial dimension of the middle drum structure is larger, the coverage range of the middle drum assembly is expanded, and the maximum dimension of the middle drum assembly is increased, thereby reducing the number of times of replacing toothed blocks, and significantly improving the production efficiency;

The axial dimension of the middle drum assembly is still able to be adjusted to a small value so as not to affect the minimum dimension of the middle drum assembly.

Apparently, the embodiments described above are merely a part rather than all of the embodiments of the present invention. All other embodiments obtained by a person of ordinary skill in the art based on the embodiments of the present invention without creative efforts shall belong to the scope of protection of the present invention.

The foregoing descriptions are merely embodiments of the present invention, but are not intended to limit the present invention. For those skilled in the art, the present invention may have various modifications and variations. Any modifications, equivalent replacements, improvements and the like made within the spirit and principle of the present invention shall belong to the scope of protection of the present invention.

## Claims

1. An adjusting method for an axial dimension of a middle drum assembly, an adjusting apparatus for the axial dimension of the middle drum assembly comprises a first middle drum block (10), a second middle drum block (20), and an intermediate middle drum block (30) located between the first middle drum block (10) and the second middle drum block (20), the adjusting method comprises:
moving at least one of the first middle drum block (10) and the second middle drum block (20) in a direction of approaching each other, and the first middle drum block (10), the second middle drum block (20) and the intermediate middle drum block (30) cross and retract with each other, so as to shorten a length of the middle drum assembly;
moving at least one of the first middle drum block (10) and the second middle drum block (20) in a direction away from each other, and the first middle drum block (10), the second middle drum block (20) and the intermediate middle drum block (30) cross and extend with each other, so as to lengthen the length of the middle drum assembly.

2. The adjusting method as claimed in claim 1, wherein both of the first middle drum block (10) and the second middle drum block (20) comprise a telescoping portion (11) extending in an axial direction of the middle drum assembly, when at least one of the first middle drum block (10) and the second middle drum block (20) moves in the direction of approaching each other, the telescoping portion (11) of the first middle drum block (10) and the intermediate middle drum block (30) extend into a gap between the two telescoping portions (11) of the second middle drum block (20), the telescoping portion (11) of the second middle drum block (20) and the intermediate middle drum block (30) extend into a gap between the two telescoping portions (11) of the first middle drum block (10).

3. The adjusting method as claimed in claim 2, wherein there are a plurality of telescoping portions (11) of the first middle drum block (10), a plurality of intermediate middle drum blocks (30), and a plurality of telescoping portions (11) of the second middle drum block (20), which are arranged alternately in sequence along a circumferential direction of the middle drum assembly.

4. The adjusting method as claimed in claim 3, wherein when at least one of the first middle drum block (10) and the second middle drum block (20) moves in the direction of approaching each other, one of the plurality of telescoping portions (11) of the first middle drum block (10) and one of the plurality of intermediate middle drum blocks (30) extend into the gap between two adjacent telescoping portions (11) of the second middle drum block (20), one of the plurality of telescoping portions (11) of the second middle drum block (20) and one of the plurality of intermediate middle drum blocks (30) extend into the gap between two adjacent telescoping portions (11) of the first middle drum block (10).

5. The adjusting method as claimed in o claim 2, wherein the first middle drum block (10) and the second middle drum block (20) further comprise an end portion (12), the end portion (12) is connected to the telescoping portion (11), and the telescoping portion (11) of the first middle drum block (10), the intermediate middle drum block (30) and the telescoping portion (11) of the second middle drum block (20) are driven to cross and retract or extend with each other by driving the end portion (12).

6. An adjusting apparatus for an axial dimension of a middle drum assembly, comprising:
a first middle drum block (10);
a second middle drum block (20); and
an intermediate middle drum block (30), the intermediate middle drum block (30) is located between the first middle drum block (10) and the second middle drum block (20), and the first middle drum block (10), the intermediate middle drum block (30) and the second middle drum block (20) are telescopically matched, and cross and retract or extend with each other when the first middle drum block (10) and the second middle drum block (20) are close to or away from each other, so as to shorten or lengthen a length of the middle drum assembly.

7. The adjusting apparatus as claimed in claim 6, wherein both of the first middle drum block (10) and the second middle drum block (20) comprise a plurality of telescoping portions (11) extending in an axial direction of the middle drum assembly, and the plurality of telescoping portions (11) of the first middle drum block (10), the intermediate middle drum block (30) and the plurality of telescoping portions (11) of the second middle drum block (20) are in a cross-telescopic matched with each other.

8. The adjusting apparatus as claimed in claim 7, wherein there are a plurality of telescoping portions (11) of the first middle drum block (10), a plurality of intermediate middle drum blocks (30), and a plurality of telescoping portions (11) of the second middle drum block (20), which are arranged alternately in sequence along a circumferential direction of the middle drum assembly.

9. The adjusting apparatus as claimed in claim 8, wherein a gap is formed between two adjacent telescoping portions (11) of the plurality of telescoping portions (11) on the first middle drum block (10) or the second middle drum block (20), one of the plurality of telescoping portions (11) of the first middle drum block (10) and one of the plurality of intermediate middle drum blocks (30) extend into the gap between the two adjacent telescoping portions (11) of the second middle drum block (20), one of the plurality of telescoping portions (11) of the second middle drum block (20) and one of the plurality of intermediate middle drum blocks (30) extend into the gap between the two adjacent telescoping portions (11) of the first middle drum block (10).

10. The adjusting apparatus as claimed in claim 7, wherein both of the first middle drum block (10) and the second middle drum block (20) further comprise an end portion (12), the end portion (12) extends along a circumferential direction of the middle drum assembly, and the telescoping portion (11) is connected to the end portion (12) and moves synchronously with the end portion (12).

11. The adjusting apparatus as claimed in claim 6, wherein the adjusting apparatus further comprises a radial drive assembly, at least one of the first middle drum block (10), the second middle drum block (20) and the intermediate middle drum block (30) is connected to the radial drive assembly, and moves along a radial direction of the middle drum assembly driven by the radial drive assembly.

12. A building drum, comprising the adjusting apparatus for the axial dimension of a middle drum assembly as claimed in any one of claims 6 to 11.
